Europäisches Patentamt

**European Patent Office**

**Office européen des brevets**

(19)

(11) Publication number: **0 102 545**
**A2**

(12) # EUROPEAN PATENT APPLICATION

(21) Application number: **83107791.2**

(22) Date of filing: **08.08.83**

(51) Int. Cl.³: **G 01 V 1/24**

(30) Priority: **27.08.82 US 412447**

(43) Date of publication of application:
**14.03.84 Bulletin 84/11**

(84) Designated Contracting States:
**DE FR GB IT NL**

(71) Applicant: **TEXACO DEVELOPMENT CORPORATION**
**2000 Westchester Avenue**
**White Plains New York 10650(US)**

(72) Inventor: **Bearden, Joe Mack**
**2414 Walnut Bend**
**Houston Texas 77042(US)**

(74) Representative: **Schupfner, Gerhard D.**
**Müller, Schupfner & Gauger Karlstrasse 5 Postfach 14 27**
**D-2110 Buchholz/Nordheide(DE)**

(54) **Geophysical data recording method.**

(57) A method in connection with geophysical and particularly seismic data processing where field generated records are fed into a central computer and processed. The processing involves correlation that in turn involves acquisition parameters related to the field generated records. A method according to this invention uses a micro-computer in the field. There, the acquisition parameters are generated and entered on the field generated records ready to be processed with accurate correlation thereafter.

./...

Croydon Printing Company Ltd

EP 0 102 545 A2

Fig. 1.

## Field of the Invention

This invention concerns geophysical data processing methods in general. It particularly relates to a method dealing with seismic data processing systems.

## Description of the Prior Art

In the past, seismic field records have been generated on magnetic tapes and thereafter the tapes were fed into a central computer where the recorded seismic data was processed. The processing involved correlation of acquisition parameters, e.g. geographical location data such as shot point locations and geophone spread positions and the like. However, it was necessary to involve manual transcription of the acquisition parameters onto a tape format which could be handled by the central computer. Consequently, there was much room for error in making the the transcriptions from related parameter information to the computer compatable tape record. In addition to such source of errors, there was considerable personnel time and consequently extra expense involved.

Consequently, it is an object of this invention to provide for the elimination of manual transcriptions by making direct magnetic tape information entries on the field generated tapes themselves.

## SUMMARY OF THE INVENTION

Briefly, the invention relates to a geophysical data recording system wherein individual data records are made in the field and processed thereafter. The said individual records have predetermined parameters associated therewith, and the invention concerns a method of

-1-

eliminating manual transcription of said parameters in 0102545 connection with said record processing. The method comprises employing a micro-computer for receiving and storing said predetermined parameters during each said individual data record. And, it comprises reading out and recording said parameters on said individual records.

Again briefly, the invention relates to seismic data processing by computer, wherein field generated seismic records are processed along with acquisition parameters applicable to said records. The invention concerns a method of eliminating manual transcription of said parameters for entry into said computer, and it comprises employing a micro-computer in the field. It also comprises entering said parameters into said micro-computer in association with said field generated records, and recording said parameters on said field generated records from said micro-computer.

BRIEF DESCRIPTION OF THE DRAWINGS

The foregoing and other objects and benefits of the invention will be more fully set forth below in connection with the best mode contemplated by the inventor of carrying out the invention, and in connection with which there are illustrations provided in the drawings, wherein:

Figure 1 is a block diagram illustrating a system including the elements employed in carrying out a method according to the invention; and

Figure 2 is another block diagram illustrating particular elements which may be employed in a system for carrying out a method according to the invention in seismic operations.

-2-

It will be appreciated by those skilled in the 0102545
art of geophysical data collection and processing that,
particularly in the seismic field there have been developed
digital recording systems that employ magnetic tapes. Such
tapes are used to make field generated recordings, and they
may involve numerous geophone instruments singlely or in
groups spread over the earth's surface for considerable
distances. Such field generated recordings may involve
marine as well as land operations.

In land operations, the field procedure may
involve generating seismic energy by detonation of
explosive charges in shallow holes. And, variations of an
explosive charge technique include detonation of a pattern
of charges, with vertical and/or horizontal spacing. Other
variations include controlling the sequence of multiple
charge detonation, and detonation of an elongated explosive
charge having a predetermined linear rate of burn.

Other seismic energy generation may be
accomplished by employing vibrators which involve a special
technique using a sweep generator to create a varying
frequency seismic energy source applied to the earth's
surface. Another type of seismic energy generation is the
dropping of a heavy weight onto the earth's surface. And,
particularly in connection with marine operations, other
types of seismic energy generation are used. For example,
a substantial volume of compressed gas may be discharged
suddenly into the surrounding medium. Also, a fluid under
hydhydraulic pressure may be discharged into the water or
the surrounding medium.

In any of the foregoing variations, records are made which provide seismic data that may be processed to determine the depth of reflections of the seismic energy which reflections are caused by formation layers where the characteristics of the formations change so that the seismic energy traveling downward in the earth will be reflected and returned to the surface. Also, occasional use is made of the refraction effects, by measuring the velocity of seismic energy in travelling from a shot point to distant geophones.

In carrying out the foregoing operations, a field crew will set up the instruments in relation to a portable recording station, and after making records at one position they will move to the next succeeding position along a particular geographical line so that the records may be correlated from one to the next. In that manner, a field crew develops data such that contour maps may be created describing the subsurface formations as determined from the seismic records.

However, in the process of making correlations and in order to develop accurate data from which contour mapping and the like may be carried out, the record processing at a central computer must include the introduction of various acquisition data. For example, data that defines the location of the recording equipment for a given record (geographical) along with groupings of geophones which are connected as a particular record is made, and similar information. These acquision related factors may be termed parameters, and they are needed so that the correlation in the central computer will be

-4-

accurate. Such acquisition data has heretofore been entered by manual transcription, e.g. by taking the information such as that recorded by an observer's log, or such as that developed from surveyors or navigators activities, and transcribing such parameters for entry onto magnetic tape or other computer compatable input such as computer cards to be used with the central computer handling of the seismic record inputs. Such transcriptions involved manual reading of the data followed by key punching or the like, and was prone to inadvertent errors. This kind of error may often vitiate the results. Furthermore, the transcription itself was expensive and time consuming whether or not any errors were introduced. By employing a method according to this invention, all the usual manual transcription steps may be pre-corrected or eliminated and consequently, the results are much improved.

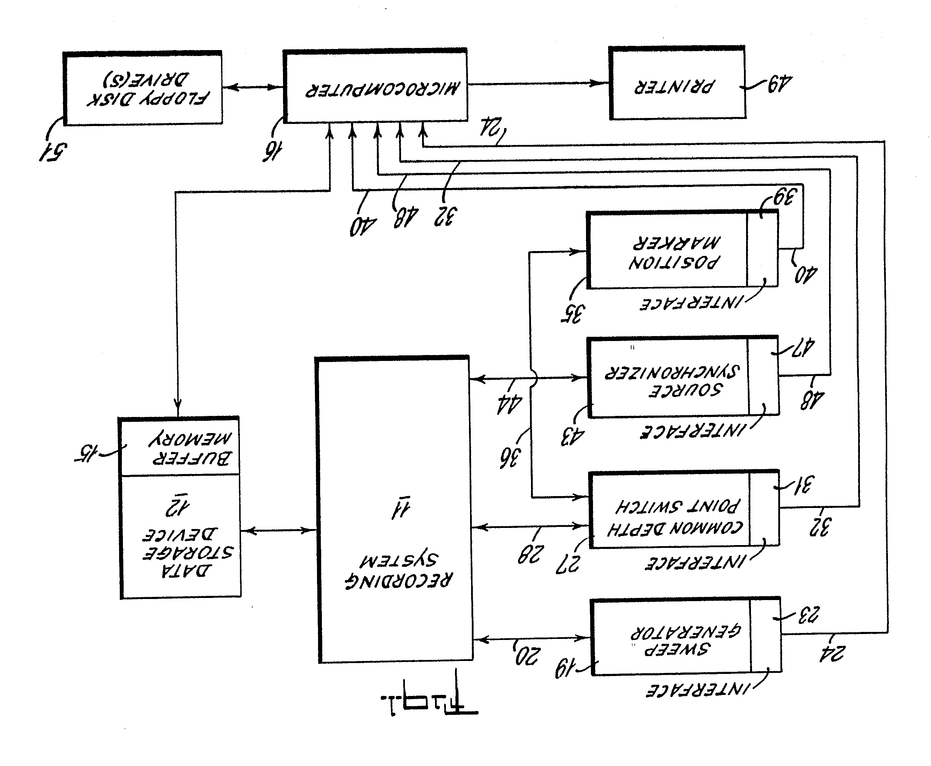

Refering to Figure 1 it will be observed that the system illustrated shows elements involved in a field (including marine) operation where seismic records are being entered, and the elements necessary to carry out a method according to this invention, are included. Thus, a recording system 11 is illustrated which might take various forms. There are various commercial systems in use which can create a magnetic (often digital) record, as a geophysical operation is carried out in the field. The record thus developed is stored on a data storage device 12 which is most commonly a magnetic tape, in seismic field operations. The data storage device 12 includes a buffer memory 15 which may take the form of a short trailer record that follows the data storage recording, or it might

-5-

otherwise be recorded coextensively with the data storage recording.

During a recording operation in the field, parameters relating to the field record in each case (which were previously recorded manually in one form or another) are directly entered and stored in a micro-computer 16. This micro-computer is located in the field and associated with the recording system 11. It is programmed for handling the parameters applicable to whatever type operation is being carried out. Thus, for example in vibrator seismic operations, there is a sweep generator 19 which has its sweep signal fed to the recording system 11 via a connection 20. And, there is an interface element 23 that develops a compatible signal which goes over an input connection 24 to the micro-computer 16 for making a record of the information concerning the parameter that relates to the sweep generator 19.

Another parameter involves the use of a common depth point switch 27. There is a connection 28 for interconnecting it with the system 11, and also there is an interface element 31 for feeding that parameter over an input connection 32 to the micro-computer 16. Also there is geographical position data which is a parameter that relates to each record of the recording operation. This parameter is developed by a position marker 35 which has an interconnection 36 to the common depth point switch unit 27. In addition, the position marker 35, has an interface unit 39 which has an input connection 40 to the micro-computer 16.

-6-

Other parameters concern a source syncronizer 43 which has an interconnection 44 to the recording system 11. It also has an interface unit 47 with an input connection 48 to the micro-computer 16.

The micro-computer 16 has a printer 49 associated therewith so that the parameters being handled may be checked any time during the operations, and a permanent account of conditions at the time may be made. Also, the micro-computer 16 is equipped with a floppy disc drive 51 so that data stored there can be handled by the micro-computer in both directions. The floppy disc drive or drives 51 contain files of information which include the basic acquisition parameters pertaining to the current and ensuing recordings as well as acting as a temporary storage medium of gathered information which is to be written onto the magnetic tape of storage device 12.

Upon energy point or shot point or other similar notation, the microcomputer 16 acting under software control causes the floppy disc drive 51 to select and assemble the applicable geographic positional information. That information might be either previously stored or, currently available from surveyor or navigator or navigational equipment. It will be understood that the information applies to the position of the geophone or hydrophone sensors at the time of a recording. And, the foregoing positional information will be combined with a set of one or more of the other parameters, e.g. those that will describe the attitude or conditions of the recording system, the energy source, the detectors and interconnecting devices, environmental characteristics and

-7-

ancilliary equipment, all at the time of data acquisition by the recording system 11.

It may also be noted that before the foregoing parameters are entered, the recording instrument operator will be interrogated by the microcomputer's program to answer questions concerning validity of data and to enter certain operator observations.

Additional parameter information will be gathered automatically by the microcomputer 16 from any of the peripheral units e.g. the sweep generator 19, the common depth point switch 27, the position marker 35, and the source synchronizer 43. This is done through the communication interfaces 23,31,39 and 47, respectively and this information is stored along with the other parameters. After the collection of all pertinent parameters and after the completion of the recording of the seismic data onto the magnetic tape, the gathered parameters are also written onto the tape, i.e. data storage device 12 as its buffer memory 15.

As an alternative, the collected parameter information could be temporarily stored on the floppy disc drive 51 or other storage media (not shown) which would be applicable for this purpose. It would eventually be recorded onto a magnetic tape (not shown) that would only contain files of such parameter information for a given line or lines of seismic traverse. Such a magnetic tape that only contained parameter information would then be read into the data processing computer automatically without the manual entry commonly required.

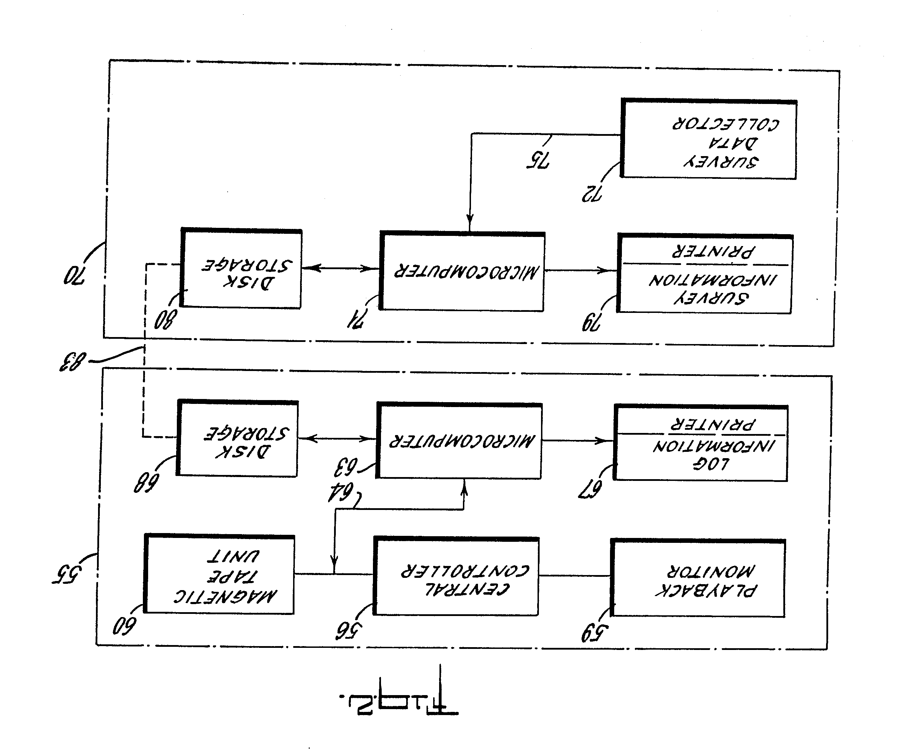

Figure 2 illustrates a typical seismic field system with the elements employed for carrying out a method according to this invention. The illustration indicates a mobile field unit 55 that is indicated by a dashed line enclosure at the top of Figure 2. This is usually a recording truck in ordinary land operations, although it may be a vessel in marine operations. And, there is a central controller 56 which has a playback monitor 59 and a magnetic tape unit 60 both connected therewith. These three units 56, 59 and 60 may be parts of a commercially available seismic recording system that is designated "Opseis 5500 Recording System" by the manufacturer. However, it will be understood that the units may be the comparable parts of various other commercially available recording systems.

Also located in the mobile field unit 55, there is a micro-computer 63 which is connected into the recording system for two-way communication by a connection 64. The micro-computer 63 may take the form of any of various different specific micro-computers that are available, e.g. a Commodore CBM or a Hewlett Packard 85. However, the micro-computer 63 is preferably a unit known as the HP-85 which is manufactered by Hewlett Packard. It includes a log information printer 67 and a disc stroage unit 68.

In the seismic field system according to Figure 2, there is a field office arrangement 70 which includes another micro-computer 71. This micro-computer 71 is used to collect and store survey data information, e.g. that which is developed by a survey data collector 72. The

-9-

as one manufactured by Hewlett Packard known as the
HP3820A.  With such an instrument, the special
microprocessor (not shown) which it incorporates stores
survey data which then may be transferred over a connection
75 to the micro-computer 71. Of course, in the case of
marine operations there would be navigation devices (not
shown) which would act as the data collector 72.

It will be understood that in seismic field
operations a seismic party includes surveyors in a land
operation who obtain the geographical information for
locating the shot points and geophone locations that are
used by the seismic recording party.  In marine operations
it is navigators who obtain the comparable data. Thus, as
the survey data is collected during the surveying procedure
(which precedes the seismic data recording in land
operations), it is recorded by the collector 72 for
transfer into the micro-computer 71.  The micro-computer 71
preferably includes a printer 79 so that the survey data
information may be reviewed as it is entered into the
computer 71.  And, there is a disc storage element 80 which
is an auxiliary of the micro-computer 71.  Element 80
stores the survey information in coordinate form so that as
a recording operation is carried out to record seismic
data, the geographic location parameters of each recording
operation are ready for use.  Such use involves having
these parameters applied directly to the magnetic tape of a
seismic data record.  In accomplishing that, the disc
storage unit 80 will have been transfered from the field
office 70 to the mobile unit 55 and inserted in place of
the above mentioned disc storage element 68 in the

-10-

recording truck. Such a transfer is indicated by a short-dashed line 83 in Figure 2. Following the transfer, the parameters of geographic location are ready for entry on each record as it is taken in the seismic data recording operations.

It may be noted that a method according to this invention includes the collection of the parameters that relate to each seismic data record. These parameters are stored in the micro-computer in the recording truck i.e. micro-computer 63. Then by proper programming of the micro-computer 63, the parameters will be transfered to the magnetic tape unit 60. As indicated above, the transferred parameters may be in the form of a trailer on the seismic data record when it is made. Or, on some types of recording systems they may be in the form of a header or leading record preceding the seismic data record.

It may be noted that a benefit of the method includes the fact that the survey data is readily provided and processed in geographical coordinate form, and this may be keyed to shot point locations by any feasible numbering and/or lettering system. It will then be directly recorded with each seismic record. And, no error will be introduced which otherwise might take place in the manual transcription of such survey information into a form such that it could be an input of the main central computer as the seismic data record is processed therein.

While particular embodiments of the invention have been described in considerable detail in accordance with the applicable statutes, this is not to be taken as in any way limiting the invention but merely as being descriptive thereof.

I CLAIM:

1. In a geophysical data recording system wherein individual data records are made in the field and processed thereafter, said individual records having predetermined parameters associated therewith, a method of eliminating manual transcription of said parameters in connection with said record processing, comprising

employing a micro-computer for receiving and storing said predetermined parameters during each said data record, and

reading out and recording said parameters on said individual records.

2. A method according to claim 1, wherein said records are magnetic.

3. A method according to claim 2, wherein said magnetic records are tapes

4. A method according to claim 3, wherein said read out and recording comprises recording said parameters as a trailer on each of said tape records.

5. In a geophysical data recording system wherein individual data records are recorded in the field and processed thereafter, said individual records being magnetic tapes and each having predetermined parameters associated therewith, a method of eliminating manual transcription of said parameters in connection with said record processing, comprising

employing a micro-computer for receiving and storing said predetermined parameters, and

reading out and recording said parameters as a trailer on said magnetic tapes.

-12-

6.    In seismic data processing by computer wherein field generated seismic records are processed along with acquision parameters applicable to said records, a method of eliminating manual transcription of said parameters for entry into said computer, comprising

employing a micro-computer in the field,

entering said parameters into said micro-computer in association with said field generated records, and

recording said parameters on said field generated records from said micro-computer.

7.    A method according to claim 6, wherein said recording comprises entry as a trailer on said field records.

Fig.1.

INTERFACE
SWEEP GENERATOR 19
24
23

INTERFACE
COMMON DEPTH POINT SWITCH 27
32
31

INTERFACE
SOURCE SYNCHRONIZER 43
48
47

INTERFACE
POSITION MARKER 35
40
39

20
28
36
44

RECORDING SYSTEM 11

DATA STORAGE DEVICE 12

BUFFER MEMORY 15

32 48 40
24
16

PRINTER 49

MICROCOMPUTER

FLOPPY DISK DRIVE(S) 51

1/2

.0102545

# Fig.2.